# EUROPÄISCHE PATENTSCHRIFT

(11) **EP 2 162 626 B1**
(45) Veröffentlichungstag und Bekanntmachung des Hinweises auf die Patenterteilung: **28.11.2012**
(21) Anmeldenummer: 08749340.9
(22) Anmeldetag: 06.05.2008
(51) Int. Cl.: F16C 17/04, F16C 17/08, F16C 17/10

(54) **LAGER MIT LAGERBUCHSE UND AXIALSICHERUNG**
BEARING WITH BUSHING AND AXIAL STOP
PALIER AVEC COUSSINET ET BLOCAGE AXIAL

(30) Priorität: 22.05.2007 DE 102007023627
(43) Veröffentlichungstag der Anmeldung: 17.03.2010
(73) Patentinhaber: ixetic Bad Homburg GmbH, 61352 Bad Homburg (DE)
(72) Erfinder: WEBERT, Dirk, 71364 Winnenden (DE); PRINZHORN, Karl, 61169 Friedberg (DE); RIPP, Jürgen, 55127 Mainz (DE)
(74) Vertreter: Gleiss, Alf-Olav
(86) Internationale Anmeldenummer: PCT/EP2008/003615
(87) Internationale Veröffentlichungsnummer: WO 2008/141727

(56) Entgegenhaltungen:
- EP-A- 0 753 678
- WO-A-2005/090803
- WO-A-2006/089721
- DE-A1- 10 322 249
- DE-C1- 4 225 000

## Beschreibung

Die Erfindung betrifft ein Lager, insbesondere Gleitlager, für eine Welle oder Achse gemäß Oberbegriff des Anspruchs 1.

Lager, insbesondere Gleitlager, für eine Welle oder Achse sind bekannt. Bei einem derartigen Lager ist die Welle oder Achse in einer Lagerbuchse angeordnet. Die Lagerbuchse ist dabei fest in eine Lagerbohrung, beispielsweise eines Flansches, eingebracht und gegen eine Bewegung in axialer Richtung gesichert. Um die Welle oder Achse neben der radialen Lagerung auch axial sichern zu können, ist bei der Welle oder Achse im Bereich der Lagerbohrung des Flansches ein Wellenbund ausgebildet und eine Axialsicherung, beispielsweise eine Anlaufscheibe, in die Lagerbohrung eingebracht. Eine Anlaufscheibe wird bevorzugt an einem Ende der Lagerbuchse angeordnet und verhindert eine Verlagerung der Welle oder Achse in axiale Richtung bezüglich der Lagerbohrung des Flansches. Es hat sich gezeigt, dass die Welle oder Achse bei bestimmten Betriebszuständen eine Auslenkung, beispielsweise durch Radialkräfte, insbesondere durch Riemenzugkräfte erfährt und eine Lage einnimmt, die von ihrer ursprünglichen Lage abweicht. Diese Auslenkung der Welle oder Achse führt dazu, dass eine Achse der Welle oder Achse im ausgelenkten Zustand einen Winkel zu einer Achse der Welle oder Achse im nicht ausgelenktem Zustand einschließt. Die Welle oder Achse verkippt also. Der maximale Winkel, den sie dabei bezüglich ihres nicht ausgelenkten Zustands einschließen kann, ist abhängig von einem Spiel zwischen Wellenbund und Lagerbuchse zum einen und einer axialen Länge der Lagerbuchse zum anderen. Im Bereich der Lagerbuchse führt die Verkippung dazu, dass es zu einem Kantentragen der Wellenbundkanten innerhalb der Lagerbuchse kommt und der Wellenbund sich in die Lagerbuchse eingräbt. Es wurde bereits versucht, durch eine Reduzierung des Spiels zwischen Lagerbuchse und Wellenbund und durch eine axiale Verlängerung der Lagerbuchse die Verkippung so klein als möglich zu halten. Ein Kantentragen der Lagerbuchse und ein Eingraben der Welle oder Achse konnte dadurch reduziert, jedoch nicht vermieden werden. Die Anpassung des Flansches an eine dadurch bedingte größere axiale Länge der Lagerbuchse führte zu einer größeren Ausführung eines Flansches und führt dadurch zwangsläufig zu einer Gewichtszunahme desselben. WO 2005/090803 A1 beschreibt ein lager gemäß dem Oberbegrift des Anspruchs 1.

Es ist daher Aufgabe der Erfindung, ein Lager zu schaffen, das die oben genannten Nachteile nicht aufweist.

Zur Lösung dieser Aufgabe wird ein Lager vorgeschlagen, welches die in Anspruch 1 genannten Merkmale umfasst. Das Lager ist für eine Welle oder eine Achse vorgesehen, wie sie sich beispielsweise in Pumpen oder Fahrzeugen finden lassen. Es weist eine Lagerbuchse, die die Welle oder Achse radial lagert, und eine Axialsicherung auf, die eine axiale Verlagerung der Welle oder Achse gegenüber einem Flansch, der beispielsweise als Pumpenflansch ausgebildet ist, verhindert. Das Lager zeichnet sich dadurch aus, dass die Lagerbuchse eine Innenfläche aufweist, die mindestens einen Stützbereich, also einen Bereich, der zumindest einen Bereich einem Wellenbundes einer Welle oder einer Achse, der Teil der Welle oder Achse ist, in radialer Richtung stützt, und mindestens einen Entlastungsbereich, also einen Bereich der Lagerbuchse, aufweist, an dem kein Bereich einen Wellenbundes der Welle oder Achse gestützt wird. Der mindestens eine Stützbereich weist einen ersten Durchmesser auf, der so gewählt ist, dass die Außenfläche mindestens eines Bereichs des Wellenbondes der Welle oder Achse am Stützbereich anliegt. Der mindestens eine Entlastungsbereich weist einen zweiten Innendurchmesser auf, der größer ist als der erste Innendurchmesser des Stützbereichs und so ausgebildet ist, dass die Außenfläche des Wellenbondes der Welle unabhängig vom Betriebszustand mit keinem Bereich am Entlastungsbereich anliegt. Der mindestens eine Entlastungsbereich reicht bis zu einem Ende der Lagerbuchse. Dies führt dazu, dass sich an den Entlastungsbereich kein weiterer Stützbereich anschließt. Die Axialsicherung umfast mind - eine Anlaufscheibe, welche an einer Seitenfläche des Wellenbondes anliegt.

Bevorzugt wird ein Ausführungsbeispiel des Lager, das sich dadurch auszeichnet, dass ein Übergang von dem mindestens einen Stützbereich zu dem mindestens einen Entlastungsbereich mindestens eine Stufe aufweist. Besonders vorteilhaft bei dieser Ausgestaltungsform ist, dass die Innenfläche der Lagerbuchse von einem ersten Radius des Stützbereichs abrupt auf einen zweiten Radius des Entlastungsbereichs übergeht, also die Innenfläche der Lagerbuchse in radialer Richtung gesehen von einer Mittelachse der Lagerbuchse nach au-βen hin zurückspringt. Dies führt zu einer kurzen axialen Bauform der Lagerbuchse.

Bei einem weiteren bevorzugten Ausführungsbeispiel ist vorgesehen, dass ein Übergang von dem mindestens einen Stützbereich zu dem mindestens einen Entlastungsbereich einen geradlinigen oder gekrümmten Verlauf aufweist. Der Verlauf ist einer erwarteten maximalen Verkippung der Achse der Welle oder Achse bezüglich der Achse der Lagerbuchse so angepasst, dass ein Entlastungsbereich und eine Außenfläche eines Bereichs des Wellenbondes der Welle oder Achse sich auch bei maximaler Verkippung nicht berühren.

Bei einem weiteren bevorzugten Ausführungsbeispiel ist vorgesehen, dass der Übergang von dem mindestens einen Stützbereich zu dem mindestens einen Entlastungsbereich eine gebrochene Fase aufweist. Diese Ausgestaltung dient dazu, ein Kantentragen der Lagerbuchse bei einer Verkippung der Welle oder Achse im Übergangsbereich zumindest zu reduzieren.

Bei einem weiteren bevorzugten Ausführungsbeispiel ist vorgesehen, dass die Lagerbuchse an beiden Enden jeweils einen Entlastungsbereich aufweist und die Entlastungsbereiche der Lagerbuchse bezüglich ihres Profils, ihrer Positionierung und ihrer Erstreckung vorzugsweise gleich ausgebildet sind.

Besonders bevorzugt wird ein Ausführungsbeispiel des Lagers, das sich dadurch auszeichnet, dass die Lagerbuchse an ihren Enden jeweils einen Entlastungsbereich aufweist und die Entlastungsbereiche der Lagerbuchse bezüglich ihres Profils, ihrer Positionierung und ihrer Erstreckung verschieden ausgebildet sind. Diese Ausführungsform ermöglicht es, die Innenflächen der Lagerbuchse auf eine zu erwartende maximale Verkippung der Achse der Welle oder Achse bezüglich der Achse der Lagerbuchse speziell auszugestalten.

Weiterhin wird ein Ausführungsbeispiel des Lagers bevorzugt, das sich dadurch auszeichnet, dass die Lagerbuchse eine Positionierungseinrichtung aufweist.

Bei einem weiteren bevorzugten Ausführungsbeispiel ist vorgesehen, dass die Positionierungseinrichtung mindestens eine Aussparung und/oder mindestens einen Vorsprung aufweist.

Bei einem weiteren bevorzugten Ausführungsbeispiel ist vorgesehen, dass die Positionierungseinrichtung mindestens zwei Aussparungen oder mindestens zwei Vorsprünge oder sowohl mindestens eine Aussparung als auch mindestens einen Vorsprung aufweist und diese - auf den Umfang der Lagerbuchse bezogen - in gleichem Abstand zueinander angeordnet sind.

Weiterhin wird ein Ausführungsbeispiel des Lagers bevorzugt, das sich dadurch auszeichnet, dass die Positionierungseinrichtung mindestens zwei Aussparungen oder mindestens zwei Vorsprünge oder sowohl mindestens eine Aussparung als auch mindestens einen Vorsprung aufweist und diese - auf den Umfang der Lagerbuchse bezogen - in ungleichem Abstand zueinander angeordnet sind.

Ein weiteres Ausführungsbeispiel des Lagers wird besonders bevorzugt, weil es sich durch zwei Anlaufscheiben auszeichnet, die an beiden Seitenflächen des Wellenbundes mit geringem Spiel anliegen und diesen damit so abstützen, dass axiale Bewegungen und Schwingungen der Welle auf ein Minimum reduziert werden.

Weitere Ausgestaltungen ergeben sich aus den Unteransprüchen.

Im Folgenden werden Ausführungsbeispiele der Erfindung anhand von Zeichnungen näher erläutert. Es zeigen:
- Figur 1: einen Längsschnitt durch ein in einem Pumpenflansch angeordnetes Lager;
- Figur 2: eine Lagerbuchse der Länge nach aufgeschnitten und abgewickelt und
- Figur 3: einen Ausschnitt einer Lagerbuchse im Längsschnitt.

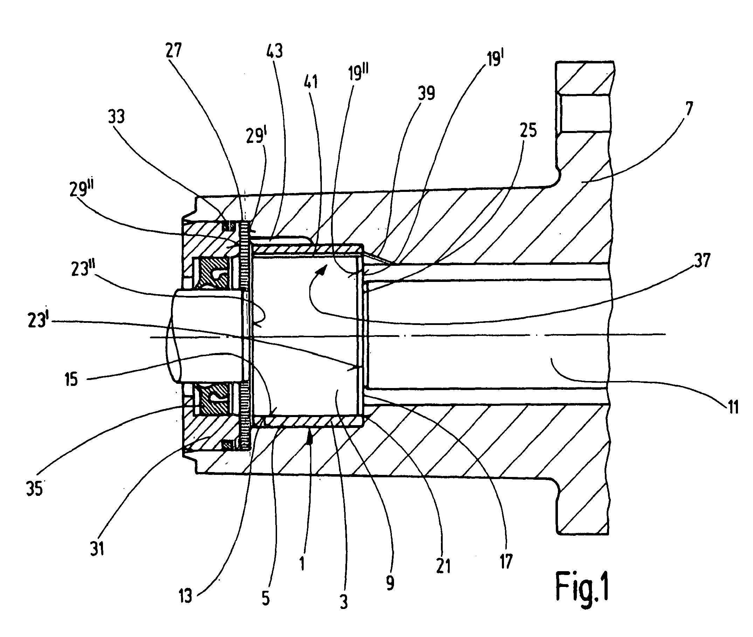

Figur 1 zeigt einen Längsschnitt durch ein als Gleitlager ausgebildetes Lager 1, mit einer Lagerbuchse 3, die in einer Lagerbohrung 5 eines Flansches 7 angeordnet ist. In der Lagerbuchse 3 ist ein Wellenbund 9 einer Welle 11 angeordnet. Der Wellenbund 9 weist eine Außenfläche 13 auf, die an einer Innenfläche 15 der Lagerbuchse 3 anliegt. Außerdem ist in der Lagerbohrung 5 des Flansches 7 eine Axialsicherung in Form einer ersten Anlaufscheibe 17 vorgesehen, die mit ihrer ersten Oberfläche 19' am Grund 21 der Lagerbohrung 5 und mit ihrer zweiten Oberfläche 19" an der Außenfläche 23' des Wellenbunds 9 anliegt. Die erste Anlaufscheibe 17 weist eine Öffnung 25 auf, in der die Welle 11 angeordnet ist.

Aus Figur 1 ist außerdem erkennbar, dass die Axialsicherung eine zweite Anlaufscheibe 27 aufweist, die mit ihrer ersten Außenfläche 29' mit geringem Spiel an der Außenfläche 23" des Wellenbundes 9 anliegt. Die zweite Außenfläche 29" der zweiten Anlaufscheibe 27 liegt an einer Buchse 31 an. Die Buchse 31 ist fest in die Lagerbohrung 5 eingebracht und weist Dichtungselemente 33 und 35 auf. Das Dichtungselement 33 ist als O-Ring-Dichtung ausgelegt und bildet eine Dichtung zwischen Buchse 31 und Flansch 7 aus. Das Dichtungselement 35 ist als Radialwellendichtring ausgebildet und dichtet gegenüber der Welle 11.

Darüber hinaus ist aus Figur 1 ersichtlich, dass eine Entlastungseinrichtung 37 vorgesehen ist, die dazu dient, Leckageöl zu einem Tank oder einer Saugseite einer Pumpe zu leiten. Die Entlastungseinrichtung 37 wird über eine Ausnehmung 39, die sich bis zum Grund 21 der Lagerbohrung 5 erstreckt, durch durchgehende Ausnehmungen in der ersten Anlaufscheibe 17 (in Figur 1 nicht dargestellt), durch eine axial verlaufende Nut 41, die durchgehend in der Innenfläche 15 der Lagerbuchse 3 eingelassen ist, und eine Entlastungsbohrung 43 realisiert.

Im Folgenden wird die Wirkungsweise des Lagers näher erläutert.

Die erste Anlaufscheibe 17 und die Lagerbuchse 3 werden in eine Lagerbohrung 5 eines Flansches 7 eingebracht. Dabei ist die Lagerbuchse 3 in die Lagerbohrung 5 beispielsweise eingepresst, eingeklebt oder eingelötet. Eine Welle 11 ist in die Öffnung 25 der ersten Anlaufscheibe 17 und der Wellenbund 9 der Welle 11 in der Lagerbuchse 3 angeordnet. Durch die Buchse 31 wird der Wellenbund 9 der Welle 11 über eine zweite Anlaufscheibe 27 mit geringem Spiel in der Lagerbohrung 5 axial positioniert. Die Anlaufscheibe 27 wird ihrerseits durch den Bund der Lagerbohrung 5 positioniert. Diese Ausgestaltungsform zeichnet sich im Wesentlichen dadurch aus, dass das Lagerspiel sich einerseits aus der axialen Länge des Wellenbunds 9 und der axialen Länge der ersten Anlaufscheibe 17 und andererseits aus der axialen Länge der Lagerbohrung 5 bestimmt.

Im eingebauten Zustand der Welle 11, beispielsweise in einer Pumpe, erfährt die Welle 11 über eine Schnittstelle, an der sie mit einer Antriebs- oder Abtriebsvorrichtung verbunden ist, eine Krafteinwirkung. Diese kann eine Verkippung der Welle 11 bezüglich ihrer Ruhelage im Bereich der Lagerbohrung 5 bewirken.

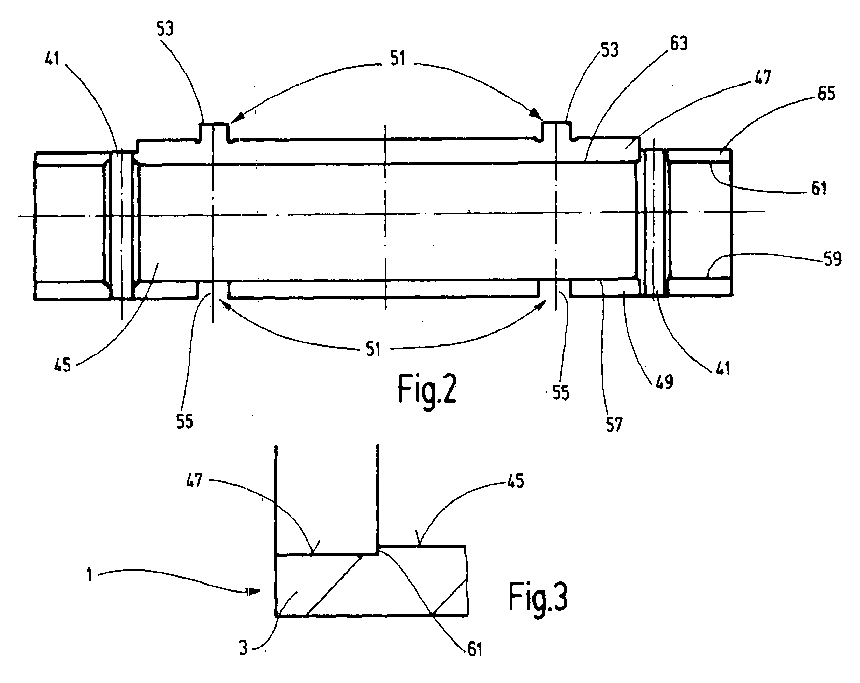

Anhand der Figuren 2 und 3 wird nun der Aufbau der verwendeten Lagerbuchse 3 des Lagers 1 näher erläutert. Gleiche Teile sind mit gleichen Bezugsziffern versehen, sodass auf eine Wiederholung der Beschreibung verzichtet wird.

Figur 2 zeigt ein Ausführungsbeispiel der Lagerbuchse 3 des Lagers 1, bei dem ein Stützbereich 45 und zwei Entlastungsbereiche 47 und 49 vorgesehen sind. Die Lagerbuchse 3 weist hier eine Positionierungseinrichtung 51 auf, die Vorsprünge 53 aufweist, die von dem Grundkörper der Lagerbuchse 3 ausgehen und über dessen obere Begrenzungskante hinausragen. Die Vorsprünge 53 sind vorzugsweise so ausgebildet, dass sie in komplementär ausgebildete Ausnehmungen einer ersten Anlaufscheibe 17 oder einer zweiten Anlaufscheibe 27 (beide in Figur 2 nicht dargestellt) eingreifen können. Die Positionierungseinrichtung 51 weist hier außerdem Aussparungen 55 auf, die hier in gleichem Abstand zueinander angeordnet sind wie die Vorsprünge 53.

Denkbar ist es aber auch, dass die Positionierungseinrichtung 51 nur einen Vorsprung 53 beziehungsweise eine Aussparung 55 oder mehr als zwei Vorsprünge 53 oder zwei Aussparungen 55 aufweist. Diese können dann auch - auf den Umfang der Lagerbuchse 3 im aufgewickelten Zustand bezogen - in einem ungleichen Abstand zueinander angeordnet sein. Die Aussparungen 55 und Vorsprünge 53 sind so ausgebildet, dass sie mit komplementär dazu ausgebildeten Aussparungen beziehungsweise Vorsprüngen einer Anlaufscheibe zusammenwirken können. Die Tiefe der Aussparung 55 bzw. die Höhe des Vorsprungs 53 - in Figur 2 senkrecht zur Längserstreckung der abgewickelten Lagerbuchse 3 gemessen - ist so gewählt, dass sie kleiner oder gleich der Dicke einer Anlaufscheibe 17, 27 ist, sodass gewährleistet ist, dass die Vorsprünge 53 der Positionierungseinrichtung 51 - in axialer Richtung im aufgewickelten Zustand der Lagerbuchse 3 betrachtet - die Anlaufscheibe 17, 27 nicht überragen und Vorsprünge der Anlaufscheibe 17, 27 gänzlich in den Aussparungen 55 aufgenommen werden und bündig mit der Stirnseite der Lagerbuchse 3 abschließen. Durch diese Ausgestaltung der Positionierungseinrichtung 51 hat diese keinen Einfluss auf das axiale Lagerspiel.

Der Entlastungsbereich 49 geht durch einen Übergang 57 in den Stützbereich 45 über. Der Entlastungsbereich 49 weist einen - auf den aufgewickelten Zustand der Lagerbuchse 3 bezogen - Radius auf, der größer ist als der Radius des Stützbereichs 45. Die Lagerbuchse 3 ist also hier im Entlastungsbereich 49 dünner ausgelegt als im Stützbereich 45, wobei dieser in Figur 2 in Richtung auf den Betrachter gegenüber dem Enttastungsbereich 49 vorspringt. Der Radius des Entlastungsbereichs 49 ist so zu wählen, dass in keinem Betriebszustand der Wellenbund 9 den Entlastungsbereich 49 berührt. Aus Figur 2 ist ersichtlich, dass der Übergang 57 durch eine Stufe 59 ausgebildet ist, die vom Stützbereich 45 aus senkrecht in die Bildebene von Figur 2 abfällt. Es ist jedoch auch denkbar, dass der Übergang 57 mehrere Stufen oder einen geradlinigen oder gekrümmten Verlauf umfasst. Die Ausführungen zum Übergang 57 und die Ausgestaltungen der Stufe 59 gelten analog für den Übergang 61 sowie die Stufe 63 vom Stützbereich 45 zum Entlastungsbereich 47.

Figur 2 zeigt ein Ausführungsbeispiel, bei dem die beiden Entlastungsbereiche 47 und 49 bezüglich ihres Profils, ihrer Positionierung und ihrer Erstreckung gleich ausgebildet sind. Zudem weisen beide den gleichen Innendurchmesser beziehungsweise die gleiche Dicke auf. Darüber hinaus sind Ausgestaltungsformen der Lagerbuchse 3 denkbar, bei denen die beiden Entlastungsbereiche 47 und 49 bezüglich ihres Profils, ihrer Positionierung und ihrer Erstreckung verschieden ausgebildet sind, insbesondere die Innendurchmesser und deren senkrecht zur Längskante der abgewickelten Lagerbuchse 3 gemessene Breite können voneinander abweichen. In letztgenanntem Fall kann die Lagerbuchse 3 speziell auf ein bestimmtes Betriebsverhalten der Welle 11 und eine zu erwartende Verkippung ausgebildet werden.
Aus Figur 2 ist weiter ersichtlich, dass bei dem vorliegenden Ausführungsbeispiel der Lagerbuchse 3 senkrecht zu deren Längserstreckung im abgewickelten Zustand Nuten 41 vorgesehen sind, die im eingebauten Zustand der Lagerbuchse 3 einen Teil einer Entlastungseinrichtung 37 darstellen. An die Nuten 41 schließt sich ein verkürzter Bereich 65 an, in dem der Entlastungsbereich 47 schmaler ist.

Figur 3 zeigt einen Ausschnitt der Lagerbuchse 3 im Längsschnitt. Deutlich ist hier der - in radialer Richtung gesehene - Rücksprung nach außen der Innenfläche 15 der Lagerbuchse 3 von dem Stützbereich 45 zu dem Entlastungsbereich 47 über einen Übergang 61 zu sehen. Die Wand der Lagerbuchse 3 ist im Entlastungsbereich 47 also dünner als im Stützbereich 45. Im Bereich des Übergangs 57, 61 kann eine Fase vorgesehen werden, die in Figur 3 nicht wiedergegeben ist. Dadurch werden ein Kantentragen sowie ein Eingraben der Welle 11 in die Lagerbuchse 3 bei einer Verkippung vermieden.

Wenn die Welle 11, wie in Figur 1 dargestellt, koaxial zur Lagerbuchse 3 angeordnet ist, verläuft die Außenfläche 23 des Wellenbunds 9 koaxial zum Entlastungsbereich 47. Der Abstand der beiden Flächen - in radialer Richtung betrachtet - entspricht der Höhe der Nut 41.

Bei einem Verkippen der Welle 11 bewegt sich beispielsweise eine Kante des Wellenbundes 9, der von den Anlaufscheiben 17, 27 beidseits mit geringem Spiel abgestützt wird auf die Innenfläche 15 der Lagerbuchse 3 zu. Figur 3 macht deutlich, dass bei einer Kippbewegung des hier nicht dargestellten Wellenbundes 9, dessen Kante den Entlastungsbereich 47 nicht berührt, weil dieser gegenüber dem Stützbereich des Wellen bundes 9 zurückspringt. Analog gilt dies für den Entlastungsbereich 49 der Lagerbuchse 3 und die gegenüberliegende Kante des Wellenbundes 9. Diese spezielle Ausgestaltung der Entlastungsbereiche 47 und 49 beugt also einem Kantentragen des Wellenbunds 9 in der Lagerbuchse 3 vor.

Die Positionierungseinrichtung 51 mit den Vorsprüngen 53 und Aussparungen 55 unterstützt ein Zusammenspiel der Lagerbuchse 3 mit den Anlaufscheiben 17 und 27: Es ist damit gewährleistet, dass die Anlaufscheiben 17, 27 in der Lagerbohrung 5 sich nicht verdrehen. Diese spezielle Ausgestaltung der Lagerbuchse 3 und der Anlaufscheiben 17 und 27 und das daraus resultierende spielarme Zusammenwirken der Elemente ermöglicht es, die Lagerbuchse 3 bezüglich ihrer - in axialer Richtung gemessenen Länge - relativ kurz zu gestalten. Eine kurze Ausgestaltungsform der Lagerbuchse 3 ermöglicht es, einen kurz ausgebildeten Flansch 7 zu realisieren.

Das oben genannte Ausführungsbeispiel beschränkt sich nicht auf die Anwendung bei Wellen, sondern ist ohne Weiteres auf die Anwendung bei Achsen übertragbar.

### Bezugszeichenliste

- 1: Lager
- 3: Lagerbuchse
- 5: Lagerbohrung
- 7: Flansch
- 9: Wellenbund
- 11: Welle
- 13: Außenfläche Wellenbund
- 15: Innenfläche Lagerbuchse
- 17: Erste Anlaufscheibe
- 19', 19": Oberfläche erste Anlaufscheibe
- 21: Grund der Lagerbohrung
- 23', 23": Außenfläche des Wellenbundes
- 25: Öffnung der ersten Anlaufscheibe
- 27: Zweite Anlaufscheibe
- 29', 29": Außenfläche der zweiten Anlaufscheibe
- 31: Buchse
- 33: Dichtungselement
- 35: Dichtungselement
- 37: Entlastungseinrichtung
- 39: Ausnehmung
- 41: Nut
- 43: Entlastungsbohrung
- 45: Stützbereich
- 47: Entlastungsbereich
- 49: Entlastungsbereich
- 51: Positionierungseinrichtung
- 53: Vorsprung
- 55: Aussparung
- 57: Übergang
- 59: Stufe
- 61: Übergang
- 63: Stufe
- 65: Verkürzter Bereich

## Patentansprüche

1. Lager (1), insbesondere Gleitlager, für eine Welle (11) oder Achse, das eine Lagerbuchse (3) und eine Axialsicherung aufweist, wobei
- die Lagerbuchse (3) eine Innenfläche (15) aufweist, die mindestens einen Stützbereich (45) und mindestens einen Entlastungsbereich (47,49) aufweist, wobei
- der mindestens eine Stützbereich (45) einen ersten Innendurchmesser aufweist, an den eine Außenfläche (13) eines Wellenbundes (9) der Welle (11) oder Achse anlegbar ist,
- der mindestens eine Entlastungsbereich (47) einen zweiten Innendurchmesser aufweist, der größer ist als der erste Innendurchmesser des Stützbereichs (45) und so ausgebildet ist, dass die Außenfläche (13) des Wellenbundes (9) der Welle (11) oder Achse nicht anliegt, wenn der Wellenbund (9) in der Lagerbuchse (3) angeordnet ist,
- der mindestens eine Entlastungsbereich (47) bis zu einem Ende der Lagerbuchse (3) reicht, **dadurch gekennzeichnet, dass** eine Axialsicherung vorgesehen ist, welche mindestens eine Anlaufscheibe (17, 27) aufweist, die so ausgebildet ist, dass sie an einer Seitenfläche des Wellenbundes (9) anliegt, wenn der Wellenbund (9) in der Lagerbuchse (3) angeordnet ist, so dass die Axialsicherung eine axiale Verlagerung der Welle (11) in der Lagerbuchse (3) verhindert.

2. Lager nach Anspruch 1, **dadurch gekennzeichnet, dass** ein Übergang (61,59) von dem mindestens einen Stützbereich (45) zu dem mindestens einen Entlastungsbereich (47,49) mindestens eine Stufe (63,59) aufweist.

3. Lager nach Anspruch 1, **dadurch gekennzeichnet, dass** ein Übergang (61,59) von dem mindestens einen Stützbereich (45) zu dem mindestens einen Entlastungsbereich (47,49) einen geradlinigen oder gekrümmten Verlauf aufweist.

4. Lager nach Anspruch 2 oder 3, **dadurch gekennzeichnet, dass** der Übergang (61) von dem mindestens einen Stützbereich (45) zu dem mindestens einen Entlastungsbereich (47) eine Fase aufweist.

5. Lager nach einem der Ansprüche 1 bis 4, **dadurch gekennzeichnet, dass** die Lagerbuchse (3) an beiden Enden jeweils einen Entlastungsbereich (47, 49) aufweist und die Entlastungsbereiche (47, 49) der Lagerbuchse (3) bezüglich ihres Profils, ihrer Positionierung und ihrer Erstreckung gleich ausgebildet sind.

6. Lager nach einem der Ansprüche 1 bis 4, **dadurch gekennzeichnet, dass** die Lagerbuchse (3) an ihren Enden jeweils einen Entlastungsbereich (47, 49) aufweist und die Entlastungsbereiche (47, 49) der Lagerbuchse (3) bezüglich ihres Profils, ihrer Positionierung und ihrer Erstreckung verschieden ausgebildet sind.

7. Lager nach einem der Ansprüche 1 bis 6, **dadurch gekennzeichnet, dass** die Lagerbuchse (3) eine Positionierungseinrichtung (51) aufweist.

8. Lager nach Anspruch 7, **dadurch gekennzeichnet, dass** die Positionierungseinrichtung (51) mindestens eine Aussparung (55) und/oder mindestens einen Vorsprung (53) aufweist.

9. Lager nach Anspruch 7, **dadurch gekennzeichnet, dass** die Positionierungseinrichtung (51) mindestens zwei Aussparungen (55) oder mindestens zwei Vorsprünge (53) oder sowohl mindestens eine Aussparung (55) als auch mindestens einen Vorsprung (53) aufweist und diese - auf den Umfang der Lagerbuchse (3) bezogen - in gleichem Abstand zueinander angeordnet sind.

10. Lager nach Anspruch 7, **dadurch gekennzeichnet, dass** die Positionierungseinrichtung (51) mindestens zwei Aussparungen (55) oder mindestens zwei Vorsprünge (53) oder sowohl mindestens eine Aussparung (55) als auch mindestens einen Vorsprung (53) aufweist und diese - auf den Umfang der Lagerbuchse (3) bezogen - in ungleichem Abstand zueinander angeordnet sind.

11. Lager nach Anspruch 1, **dadurch gekennzeichnet, dass** die Axialsicherung zwei Anlaufscheiben (17, 27) aufweist, von denen je eine an der Seitenfläche des Wellenbunds (9) mit geringem Spiel anliegt.

## Claims

1. A bearing (1), particularly a sliding bearing for a shaft (11) or axle, having a bearing bushing (3) and an axial retainer, wherein
the bearing bushing (3) has an interior surface (15) having at least one support area (45) and at least one relief area (47, 49), wherein
the at least one support area (45) has a first interior diameter to which an outer surface (13) of a shaft collar (9) of the shaft (11) or axle can abut,
the at least one relief area (47) has a second interior diameter that is larger than the first interior diameter of the support area (45) and configured in a way that the outer surface (13) of the shaft collar (9) of the shaft (11) or axle does not abut when the shaft collar (9) is arranged in the bearing bushing (3),
the at least one relief area (47) extends up to one end of the bearing bushing (3),
**characterised in that** an axial retainer is provided that has at least one thrust washer (17, 27) which is configured in a way that it abuts to one lateral surface of the shaft collar (9) when the shaft collar (9) is arranged in the bearing bushing (3), so that the axial retainer prevents any axial displacement of the shaft (11) in the bearing bushing (3).

2. The bearing according to claim 1, **characterised in that** a transition (61, 59) from the at least one support area (45) to the at least one relief area (47, 49) has at least one step (63, 59).

3. The bearing according to claim 1, **characterised in that** a transition (61, 59) from the at least one support area (45) to the at least one relief area (47, 49) has a straight or arcuate course.

4. The bearing according to claim 2 or 3, **characterised in that** the transition (61) from the at least one support area (45) to the at least one relief area (47) has a chamfer.

5. The bearing according to any one of claims 1 to 4, **characterised in that** the bearing bushing (3) respectively has a relief area (47, 49) on both of its ends, and the relief areas (47, 49) of the bearing bushing (3) present an identical configuration with regard to their profile, their positioning and their extension.

6. The bearing according to any one of claims 1 to 4, **characterised in that** the bearing bushing (3) respectively has a relief area (47, 49) on its ends, and the relief areas (47, 49) of the bearing bushing (3) present a different configuration with regard to their profile, their positioning and their extension.

7. The bearing according to any one of claims 1 to 6, **characterised in that** the bearing bushing (3) has a positioning device (51).

8. The bearing according to claim 7, **characterised in that** the positioning device (51) has at least one recess (55) and/or at least one projection (53).

9. The bearing according to claim 7, **characterised in that** the positioning device (51) has at least two recesses (55) or at least two projections (53), or both at least one recess (55) as well as at least one recess (53), and that these are arranged - relative to the circumference of the bearing bushing (3) - with an equal distance to each other.

10. The bearing according to claim 7, **characterised in that** the positioning device (51) has at least two recesses (55) or at least two projections (53), or both at least one recess (55) as well as at least one recess (53), and that these are arranged - relative to the circumference of the bearing bushing (3) - with a different distance to each other.

11. The bearing according to claim 1, **characterised in that** the axial retainer has two thrust washers (17, 27), each of which respectively abuts against the lateral surface of the shaft collar (9) with little clearance.

## Revendications

1. Palier (1), en particulier palier lisse, pour un arbre (11) ou axe qui présente un coussinet (3) et une sécurité axiale, dans lequel
- ledit coussinet (3) présente une surface intérieure (15) qui présente au moins une zone d'appui (45) et au moins une zone de décharge (47, 49),
- ladite au moins une zone d'appui (45) présentant un premier diamètre intérieur sur lequel peut porter une surface extérieure (13) d'un collet (9) de l'arbre (11) ou axe,
- ladite au moins une zone de décharge (47) présentant un second diamètre intérieur qui est supérieur au premier diamètre intérieur de la zone d'appui (45) et est conçue de manière à ce que la surface extérieure (13) du collet (9) de l'arbre (11) ou axe ne porte pas lorsque le collet (9) est disposé dans le coussinet (3),
- ladite au moins une zone de décharge (47) s'étendant jusqu'à une extrémité du coussinet (3),
**caractérisé en ce qu'**une sécurité axiale est prévue, ladite sécurité axiale présentant au moins un plaque de butée (17, 27) qui est conçue de manière à porter sur une surface latérale du collet (9) lorsque le collet (9) est disposé dans le coussinet (3) de façon à ce que la sécurité axiale empêche tout déplacement axial de l'arbre (11) dans le coussinet (3).

2. Palier selon la revendication 1, **caractérisé en ce qu'**une transition (61, 59) entre la au moins une zone d'appui (45) et la au moins une zone de décharge (47, 49) présente au moins un échelon (63, 59).

3. Palier selon la revendication 1, **caractérisé en ce qu'**une transition (61, 59) entre la au moins une zone d'appui (45) et la au moins une zone de décharge (47, 49) présente un tracé rectiligne ou curviligne.

4. Palier selon l'une quelconque des revendications 2 ou 3, **caractérisé en ce que** la transition (61) entre la au moins une zone d'appui (45) et la au moins une zone de décharge (47) présente un chanfrein.

5. Palier selon l'une quelconque des revendications 1 à 4, **caractérisé en ce que** le coussinet (3) présente une zone de décharge (47, 49) à chacune de ses deux extrémités et lesdites zones de décharge (47, 49) du coussinet (3) sont de conceptions identiques quant à leur profil, leur positionnement et leur extension.

6. Palier selon l'une quelconque des revendications 1 à 4, **caractérisé en ce que** le coussinet (3) présente une zone de décharge (47, 49) à chacune de ses extrémités et lesdites zones de décharge (47, 49) du coussinet (3) sont de conceptions différentes quant à leur profil, leur positionnement et leur extension.

7. Palier selon l'une quelconque des revendications 1 à 6, **caractérisé en ce que** le coussinet (3) présente un dispositif de positionnement (51).

8. Palier selon la revendication 7, **caractérisé en ce que** le dispositif de positionnement (51) présente au moins un évidement (55) et/ou au moins une saillie (53).

9. Palier selon la revendication 7, **caractérisé en ce que** le dispositif de positionnement (51) présente au moins deux évidements (55) ou au moins deux saillies (53), ou non seulement au moins un évidement (55) mais aussi au moins une saillie (53), et ceux-ci sont disposés les uns des autres avec mêmes distances - par rapport à la circonférence du coussinet (3).

10. Palier selon la revendication 7, **caractérisé en ce que** le dispositif de positionnement (51) présente au moins deux évidements (55) ou au moins deux saillies (53) ou non seulement au moins un évidement (55) mais aussi au moins une saillie (53) et ceux-ci sont disposés les uns des autres avec des distances différentes - par rapport à la circonférence du coussinet (3).

11. Palier selon la revendication 1, **caractérisé en ce que** la sécurité axiale présente deux plaques de butée (17, 27), dont chacune porte sur la surface latérale du collet (9) avec un jeu réduit.
